Europäisches Patentamt

European Patent Office

Office européen des brevets

(11) Publication number: **0 547 651 A1**

# EUROPEAN PATENT APPLICATION

(21) Application number: **92203579.5**

(22) Date of filing: **20.11.92**

(51) Int. Cl.5: **A23D 9/00**, A23G 1/00, C11B 7/00, C11C 3/12

(30) Priority: **09.12.91 EP 91311406**

(43) Date of publication of application:
**23.06.93 Bulletin 93/25**

(84) Designated Contracting States:
**AT BE CH DE DK ES FR GB GR IE IT LI NL PT SE**

(71) Applicant: **UNILEVER N.V.**
**Weena 455**
**NL-3013 AL Rotterdam(NL)**

(84) **BE CH DE DK ES FR GR IT LI NL PT SE AT**

(71) Applicant: **UNILEVER PLC**
**Unilever House Blackfriars P.O. Box 68**
**London EC4P 4BO(GB)**

(84) **GB IE**

(72) Inventor: **Cain, Frederick William**
**Dr. Blookerstraat 12**
**NL-2271 VL Voorburg(NL)**
Inventor: **Talbot, Geoffrey**
**22 The Elms**
**Kempston, Beds(GB)**
Inventor: **Bennett, Jane Caroline**
**76, Wyndcliff Road**
**Charlton, London(GB)**

(74) Representative: **Sikken, Antonius H. J. M. et al**
**UNILEVER N.V., Patent Division, P.O. Box 137**
**NL-3130 AC Vlaardingen (NL)**

(54) **Improved non-lauric triglyceride compositions.**

(57) Triglyceride compositions containing :
- 18-28 wt.% of $C_{16}$-$C_{18}$ saturated fatty acids;
- 0-6 wt.% of $C_{18}$ saturated fatty acids;
- 35-45 wt.% of $C_{18:1}$ trans-unsaturated fatty acids;
- 25-35 wt.% of $C_{18:1}$ cis-unsaturated fatty acids,

and that display preferably an N-profile of $N_{20} > 40$ and $N_{30} < 8$ and show improved softening and non-tempering behaviour of cool-melting filling fats.

Cool-melting characteristics are often desirable in a filling for confectionery because of the clean mouthfeel which they impart. Traditionally, this has been achieved either by using lauric fats which have particularly cool-melting properties or, more recently, by using a mixture of palm mid-fraction and palm oil olein.

However, the use of lauric fats in fillings, and in particular in real chocolate shells, cause fat migration on storage. As a result, the chocolate shell will soften while also bloom of the shell will occur.

The use of the above-mentioned mixture of palm mid-fraction and palm oil olein will overcome some of the problems. However, these mixtures will contain considerable amounts of POP-triglycerides (P = palmitic, O = oleic). Therefore, these fats will be polymorphic so that they require tempering. Tempering, however, is a difficult process and should therefore be avoided, if possible.

So, we have been looking for non-lauric triglyceride compositions for the confectionery industry that combine cool-melting characteristics with good non-softening and good non-tempering properties.

We have succeeded in obtaining non-lauric, non-temper, cool-melting triglyceride compositions suitable as filling fats which meet the above-mentioned requirement. Therefore, our invention is concerned with non-lauric, non-temper, cool-melting triglyceride compositions that are characterized by 1) content of $C_{16}$ saturated fatty acids of 18-28 wt.%; 2) content of $C_{18}$ saturated fatty acids of 0-6 wt.%; 3) content of $C_{18:1}$ trans-unsaturated fatty acids of 35-45 wt.% and 4) content of $C_{18:1}$ cis-unsaturated fatty acids of 25-35 wt.%.

Preferred ranges are : $C_{16}$ : 20-25 wt.%;
$C_{18}$ : 2-5 wt.%;
$C_{18:1}$ (trans) : 37-42 wt.%;
$C_{18:1}$ (cis) : 27-33 wt.%.

The N-profile (NMR pulse, stabilized) of these triglyceride compositions is in general $N_{20} > 40$ and $N_{30} < 8$.

The triglyceride compositions comprise in particular blends of non-lauric fats (= I) and liquid, transhardened high-stability oils (= II), wherein the weight ratio of I : II ranges from 60:40 to 40:60, preferably from 55:45 to 45:55.

It should be noted that triglyceride compositions, suitable as cocoa butter equivalent fat, are known from DE 2 717 602; these fats display the following composition:

| trans-acids | more than 35 wt% |
|---|---|
| palmitic acid | 15-40 wt% |
| stearic acid | 2-10 wt% |
| oleic acid | 55-75 wt% |
| while its IV = 55-70 | |

These compounds need to be compatible with cocoa butter and require a good mouthmelt. Nothing is said about its behaviour as filling fat. Further, the oleic acid content is far above the oleic acid content of our compositions, which makes them less suitable as filling fat.

The non-lauric fats (I) in the blends according to the invention are mid-fractions that can be obtained from the wet fractionation of fat mixtures containing hardened soybean oil. These last-mentioned fat mixtures preferably contain palm oil olein as the other fat component, which was hardened together with the soybean oil.

The liquid, trans-hardened, high-stability oils (II) in the blends according to the invention are olein fractions that can be obtained from the wet fractionation of fat mixtures containing hardened soybean oil. These last-mentioned fat mixtures preferably contain palm oil olein as the other fat component, which was hardened with the soybean oil.

The ratio of the fat component(s) in the mixtures containing hardened soybean oil can vary between 90:10 and 10:90, preferably between 70:30 and 30:70, hardened soybean oil : other hardened, vegetable fat. We prefer, however, to use mixtures having more than 50% of the other hardened fat component, which is preferably hardened palm oil olein.

As will be understood from the above, the blends can consist of the fat components (I) and (II) that originate from the same or from a different wet fractionation of mixtures containing hardened soybean oil. However, the best blends are obtained when part of the olein fraction is mixed with the mid-fraction of the same wet fractionation.

The best filling fats that can be obtained according to the invention, display a solid fat profile, when measured by NMR pulse technique, of :
$N_{20}$ (stab. at 26°C for 1 hour) = > 40.0 and

2

$N_{30}$ (stab. at 26°C for 1 hour) of less than 8.0.

The invention is also concerned with cool-melting chocolate fillings having improved softening and non-tempering properties which contain the triglyceride composition according to the invention. Also food products that contain such chocolate fillings are part of the invention.

Another part of the invention is the use of triglyceride compositions with the composition of the triglyceride compositions according to the invention in order to improve the softening and non-tempering properties of cool-melting chocolate fillings.

The triglyceride compositions according to the invention can be prepared in several ways. The most efficient way is a catalytic hardening of soybean oil, which optionally contains wet-fractionated palm oil olein, followed by wet fractionation of the hardened product.

In this wet fractionation three fractions are obtained :

1) a hard stearin fraction;
2) a mid-fraction ( = I);
3) an olein fraction ( = II).

Mid-fraction I is then blended with either the olein fraction II obtained, or with another olein fraction obtained in a separate wet fractionation process. However, changes in the order of the reaction steps are possible within the process described. However, this is to be considered to be within the scope of our invention.

The hardening of the fat mixtures containing soybean oil is carried out in a way such that the highest amount of trans-hardened oil is obtained. For this purpose a sulphided Ni-catalyst is very suitable.

The wet fractionation is carried out in the normal way, using acetone as solvent in a ratio of more than 3 volume units acetone per weight unit of oil (so e.g. litres per kg). The components are mixed at T above 35°C, cooled to -15 to +15°C and separated, whereby a solid fraction is obtained. This solid fraction is dissolved in acetone, again at T above 35°C, whereupon the mixture is cooled to 16-24°C. The acetone fraction, which is separated, is worked up in order to collect the mid-fraction.

## EXAMPLE I

The following mixtures were made and from these mixtures the $N_{20}$; $N_{25}$; $N_{30}$ and $N_{35}$ (stabilized at 26°C for 1 hour) were measured.

| Mixture | Mid-fraction of hydrogenated mixture of soybean oil/wet-fract. palm oil olein | Olein fraction of hydrogenated mixture of soybean oil/wetfract. palm oil olein | $N_{20}$ | $N_{25}$ | $N_{30}$ | $N_{35}$ |
|---|---|---|---|---|---|---|
| A | 60 | 40 | 59.3<br>61.3 | 36.4<br>39.1 | 9.8<br>10.9 | 0.4<br>0.0 |
| B | 50 | 50 | 50.2<br>52.2 | 27.5<br>29.8 | 4.7<br>6.3 | 0.0<br>0.0 |
| C | 40 | 60 | 41.4<br>41.8 | 20.5<br>21.2 | 2.5<br>2.5 | 0.1<br>0.0 |

The FAME of these mixtures was also measured. This resulted in the following data :

| Mixture | $C_{16}$ (sat.) | $C_{18}$ (sat.) | $C_{18:1}$ (tr.) | $C_{18:1}$ (cis) |
|---|---|---|---|---|
| A | 24.38 | 4.86 | 40.02 | 28.72 |
| B | 23.55 | 4.65 | 39.15 | 30.60 |
| C | 22.72 | 4.44 | 38.28 | 32.41 |

## EXAMPLE II

In this comparative Example, three mixtures (D, E and F) were made, having the compositions mentioned below :

FAME

Mixture D    70% hard. palm oil olein    $C_{16}$ :    31.72

$N_{20}$ = 55    30% olein fraction of hydrogenated mixture of soybean/wet-fractionated palm olein

$C_{18}$ :    4.09
$C_{18:1\ tr}$ = 34.59
$C_{18:1\ cis}$ = 26.77

$N_{30}$ = 21

Mixture E    1:1 hard. palm oil olein/ wet-fractionated palm oil olein

$C_{16}$ :    36.7

$C_{18}$ :    3.6

$N_{30}$ = 35

$C_{18:1\ tr}$ = 17.35

$C_{18:1\ cis}$ = 33.15

Mixture F    90% hard. palm oil olein    $C_{16:0}$ = 22.7

$N_{20}$ = 57    10% olein fraction of hydrogenated mixture of soybean/wet-fractionated palm olein

$C_{18:0}$ = 12.1
$C_{18:1\ tr}$ = 38.9
$C_{18:1\ cis}$ = 23.6

$N_{30}$ = 21

## EXAMPLE III

The following recipe was used for the preparation of chocolate compositions :

| | |
|---|---|
| Cocoa powder 10/12 | 5% |
| SMP | 5% |
| Fat* | 45% |
| Sugar | 35% |
| Dextrose | 10% |
| Lecithin | 0.4% |

\* Compositions B, D, E and F were applied, respectively.

The ingredients were roller-refined to 15-20 $\mu$m. Residual fat, refined ingredients and lecithin were mixed for 30 minutes.

The filling thus obtained was placed in a foil cup and cooled at 12°C for 20 minutes.

A test panel of 5 panelists assessed coolness, melt-down and mouthfeel on a scale from 0-10 (10 is the highest score).

The results obtained with the different fat compositions B, D, E and F are listed below (average over 5 panelists) :

| Fat mixture | B | D | E | F |
|---|---|---|---|---|
| Coolness | 7.2 | 3.6 | 5.2 | 1.6 |
| Melt-down | 6.8 | 3.4 | 6.0 | 2.6 |
| Mouthfeel | 7.0 | 3.8 | 5.8 | 2.3 |

4

**Claims**

1. Non-lauric, non-temper, cool-melting triglyceride composition characterized by a
   - content of $C_{16}$-saturated fatty acids of 18-28 wt.%, preferably 20-25 wt.%;
   - content of $C_{18}$-saturated fatty acids of 0-6 wt.%, preferably 2-5 wt.%;
   - content of $C_{18:1}$ trans-unsaturated fatty acids of 35-45 wt.%, preferably 37-42 wt.%;
   - content of $C_{18:1}$ cis-unsaturated fatty acids of 25-35 wt.%, preferably 27-33 wt.%.

2. Non-lauric, non-temper, cool-melting triglyceride composition according to Claim 1, characterized by a solid fat index (NMR pulse, stabilized) of $N_{20} > 40$ and $N_{30} < 8$.

3. Non-lauric, non-temper, cool-melting triglyceride composition according to Claim 1 or 2, wherein the composition comprises a blend of non-lauric fats ( = I) and liquid, trans-hardened, high-stability oils ( = II), wherein the weight ratio of I : II ranges from 60:40 to 40:60.

4. Triglyceride composition according to Claim 3, wherein the non-lauric fats (I) are mid-fractions of the wet fractionation of fat mixtures containing hardened soybean oil.

5. Triglyceride composition according to Claim 4, wherein the mixture containing hardened soybean oil also comprises hardened, wet-fractionated palm oil olein.

6. Triglyceride composition according to Claim 5, wherein the mixture containing hardened soybean oil comprises hardened, wet-fractionated palm oil olein in an amount such that the weight ratio of hardened soybean oil : hardened palm oil olein is 90:10 to 10:90, preferably 70:30 to 30:70.

7. Triglyceride composition according to Claim 3, wherein the liquid, trans-hardened, high-stability oils (II) are olein fractions of the wet fractionation of mixtures containing hardened soybean oil.

8. Triglyceride composition according to Claim 7, wherein the mixtures containing hardened soybean oil also comprise hardened, wet-fractionated palm oil olein.

9. Triglyceride composition according to Claim 3, wherein the components (I) and (II) originate from the same wet fractionation of mixtures containing hardened soybean oil.

10. Triglyceride composition according to Claim 3, wherein the components (I) and (II) originate from a different wet fractionation of mixtures containing hardened soybean oil.

11. Triglyceride composition according to Claim 3, wherein the ratio of I : II ranges from 55:45 to 45:55.

12. Process for the preparation of non-lauric, non-temper, cool-melting triglyceride compositions suitable as filling fats with the composition according to Claim 1, wherein soybean oil, optionally mixed with wet-fractionated palm oil olein, is hardened catalytically, whereupon the hardened product is wet-fractionated and separated into a hard stearin fraction, a mid-fraction and an olein fraction, after which the mid-fraction (as non-lauric fat) is blended with part of an olein fraction from the same or a different wet fractionation (as a liquid, trans-hardened, high-stability oil).

13. Process according to Claim 12, wherein the hardening is carried out with a sulphided Ni-catalyst.

14. Process according to Claim 12, wherein the wet fractionation is carried out with acetone in a ratio of more than 3 volume units acetone per weight unit of oil.

15. Cool-melting chocolate fillings having improved softening and non-tempering properties, which contain a fat blend according to Claims 1-11.

16. Food products containing a chocolate filling according to Claim 15.

17. Use of a triglyceride composition with the composition according to Claims 1-11, wherein the composition is used for improving the softening and non-tempering properties of cool-melting chocolate

fillings.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-2 717 602 (ASAHI DENKA KOGYO KK) | 1,3 | A23D9/00 |
| Y | * page 9, paragraph 1; claims 2,4-6; examples 1-3,6 * | 2,3 | A23G1/00 C11B7/00 |
| A | * page 9, paragraph 3 * | 5,7,8, 11-14,17 | C11C3/12 |
|  | * page 11, paragraph 3 * * page 11, paragraph 4 * * page 12 * |  |  |
|  | --- |  |  |
| Y | DATABASE WPIL Section Ch, Week 8016, 1980 Derwent Publications Ltd., London, GB; Class D, AN 80-28519C & JP-A-55 034 052 (ASAHI DENKA KOGYO) * abstract * | 2,3 |  |
|  | --- |  |  |
| A | Section Ch, Week 8832, 1988 Derwent Publications Ltd., London, GB; Class D, AN 88-227075 & SU-A-1 369 875 (BUTTER FAT IDN RES) * abstract * | 3,5,6,8, 11,15-17 | TECHNICAL FIELDS SEARCHED (Int. Cl.5 ) |
|  | --- |  |  |
| A | WO-A-9 109 533 (THE PROCTER & GAMBLE COMPANY) * page 11, line 25 - page 12, line 24; claim 1 * * page 5, line 19 - page 6, line 35 * | 1,2,12, 13 | A23G A23D C11B |
|  | --- |  |  |
| A | BE-A-556 778 (UNILEVER NV) * page 2, paragraph 4; claims 1,3,6,8,11 * * page 3 * | 1,13,14, 16,17 |  |
|  | --- |  |  |
| A | DE-A-2 533 375 (UNILEVER NV) * examples 1,2 * | 5,6,8 |  |
|  | ----- |  |  |

The present search report has been drawn up for all claims

| Place of search | Date of completion of the search | Examiner |
|---|---|---|
| THE HAGUE | 12 FEBRUARY 1993 | KANBIER D.T. |

EPO FORM 1503 03.82 (P0401)